**Europäisches Patentamt**

**European Patent Office**

**Office européen des brevets**

(19)

(11) Veröffentlichungsnummer : **0 482 401 B1**

(12)

# EUROPÄISCHE PATENTSCHRIFT

(45) Veröffentlichungstag der Patentschrift :
**14.12.94 Patentblatt 94/50**

(51) Int. Cl.$^5$ : **G01S 15/04, G08B 13/16**

(21) Anmeldenummer : **91116937.3**

(22) Anmeldetag : **04.10.91**

(54) **Verfahren zur Ultraschallüberwachung von Räumen, insbesondere bei Fahrzeugen.**

(30) Priorität : **23.10.90 DE 4033605**

(43) Veröffentlichungstag der Anmeldung :
**29.04.92 Patentblatt 92/18**

(45) Bekanntmachung des Hinweises auf die
Patenterteilung :
**14.12.94 Patentblatt 94/50**

(84) Benannte Vertragsstaaten :
**AT BE DE ES FR GB IT SE**

(56) Entgegenhaltungen :
**EP-A- 0 058 205**
**EP-A- 0 363 216**
**EP-A- 0 368 303**
**DE-A- 3 226 517**
**DE-A- 3 906 627**
**DE-U- 8 912 983**
**GB-A- 2 050 022**
**US-A- 4 499 564**

(73) Patentinhaber : **Kabelwerke Reinshagen
GmbH
Reinshagenstrasse 1
D-42369 Wuppertal (DE)**

(72) Erfinder : **Homberg, Martin, Dipl.-Ing.
Jesinghausen 4
W-5600 Wuppertal 22 (DE)**
Erfinder : **Hahn, Helmut, Dipl.-Ing.
Benderstrasse 101
W-4000 Düsseldorf 12 (DE)**
Erfinder : **Mühlhaus, Dirk, Dipl.-Ing.
Feldkampstrasse 41
W-4690 Herne 1 (DE)**

(74) Vertreter : **Priebisch, Rüdiger, Dipl.-Ing.,
Dipl.-Wirtsch.-Ing. (FH)
Kabelwerke Reinshagen GmbH
Patentabteilung
Reinshagenstrasse 1
D-42369 Wuppertal (DE)**

**Beschreibung**

Die Erfindung bezieht sich auf ein Überwachungs-Verfahren der im Oberbegriff des Anspruches 1 angegebenen Art. Es gibt prinzipiell zwei verschiedene Überwachungsmethoden.

Die erste Methode arbeitet nach dem Echoprinzip, die auf dem Doppler-Effekt beruht. Hier wird ein Impuls gesendet und das Echo empfangen. Bei einem im Überwachungsraum bewegten Körper ergibt sich beim Echo eine andere Frequenz. Die Frequenzverschiebung wird zur Alarmauslösung genutzt. Statt des Doppler-Effekts kann man auch das Echobild auswerten, das sich bei Veränderungen im Überwachungsraum ebenfalls verändert. Dieses Meßverfahren ist verhältnismäßig aufwendig und unzuverlässig.

Günstiger in dieser Hinsicht ist eine auf Auswertung eines Interferenzfeldes beruhende Überwachung, (DE-OS 38 38 150). Hier sind der Sender von Ultraschall-Impulsen einerseits und der Empfänger von reflektierten Signalen an den Wänden und Objekten im Überwachungsraum andererseits gleichzeitig aktiv. Aus der Überlagerung der Sendeimpulse und Reflexionssignale entsteht im Überwachungsraum ein Interferenzfeld, das ausgewertet wird. Bei diesem Verfahren verwendet man einen am Empfänger angeschlossenen Auswerter, der stets in definierten Zeitpunkten einer mit der Sendedauer abgestimmten Meßperiode die Meßpegel des Empfangsignals erfaßt, als zeitabhängiges Meßprofil abspeichert und mit dem bei einem vorausgehenden Sendeimpuls angefallenen Meßprofil punkteweise vergleicht. Entsprechend dem Vergleichsergebnis wird ein am Auswerter angeschlossener Alarmgeber wirksam gesetzt bzw. unwirksam gelassen. Auf dieser Überwachungsmethode baut auch die Erfindung auf.

Bei den bekannten Verfahren dieser Art wurde der zeitliche Aufbau des Interferenzfeldes überwacht, der sich im Meßprofil niederschlägt und charakteristisch für den gegebenen Überwachungsraum ist. Ändern sich die Verhältnisse im Überwachungsraum, so wirkt sich dies sogleich in einem andersartigen Interferenzfeld-Aufbau aus, was am Meßprofil festgestellt werden kann. Diese besondere Meßmethode ist zwar sehr empfindlich, reagiert aber auch auf andere Einflüsse, die nicht Ursache für einen Alarm sein dürfen. Bei einer Anwendung auf die Diebstahls-Überwachung von Kraftfahrzeugen zeigte es sich, daß durch Klopfen an der Scheibe oder Umweltgeräusche sich bereits Änderungen im zeitlichen Aufbau des Interferenzfeldes ergaben. Besonders schwerwiegend war aber, daß Fehlalarm durch eine infolge von Sonneneinstrahlung im Fahrzeuginneren sich ergebenden Thermik bereits ausgelöst werden konnte.

Der Erfindung liegt daher die Aufgabe zugrunde, ein zuverlässiges, einfaches Verfahren zur Ultraschall-Überwachung der im Oberbegriff von Anspruch 1 genannten Art zu entwickeln, das zwar sehr empfindlich ist, aber Fehlalarm vermeidet. Dies wird erfindungsgemäß durch die im Kennzeichen des Anspruches 1 angegebenen Maßnahmen erreicht, denen folgende besondere Bedeutung zukommt.

Man geht zunächst davon ab, wie bisher, den zeitlichen Aufbau des Interferenzfeldes während zweier miteinander zu vergleichender Meßperioden heranzuziehen, sondern verwendet zur Messung den Endzustand nach dem Einschwingen des Interferenzfeldes. Es zeigte sich nämlich, daß dieser Bereich, trotz seiner Änderung durch Umwelteinflüsse, eine überraschend zuverlässige Auswertung ermöglicht. Wenn Thermik im Überwachungsraum wirksam ist, ergeben sich in aufeinanderfolgenden Meßschritten zwar unterschiedlich hohe Meßpegel, doch hat die Erfindung erkannt, daß, solange die räumlichen Verhältnisse im Überwachungsraum unverändert bleiben, die beiden miteinander zu vergleichenden Meßprofile mindestens abschnittweise zueinander ähnlich ausfallen. Daher schlägt die Erfindung vor, die miteinander zu vergleichenden Meßprofile mit ihren jeweiligen Meßzeitpunkten abszissengerecht übereinander zu legen. Bereits dann kommen einige Abschnitte der beiden Meßprofile, innerhalb einer vorgegebenen Pegeltoleranz, im wesentlichen miteinander zur Deckung. Diese, nachfolgend kurz "Konvergenzabschnitte" bezeichneten Teile des zweiten Meßprofils brauchen in dem sich nun anschließenden Verfahren nicht weiter berücksichtigt zu werden, sondern man beschäftigt sich mit jenen anderen Abschnitten, welche die Pegeltoleranz übersteigen und daher nachfolgend kurz "Divergenzabschnitte" bezeichnet werden sollen. Innerhalb der Meßdauer kann das zweite Meßprofil gegenüber dem ersten mehrere Divergenzabschnitte aufweisen. Diese werden nun schrittweise in Ordinatenrichtung parallelverschoben mit dem Ziel, die Abweichungen der beiden Meßprofile in diesem Divergenzabschnitt möglichst zu beseitigen. Man geht dabei von einer bestimmten Pegeltoleranz aus und berücksichtigt nur solche Abweichungen, die größer als die Pegeltoleranz sind und daher nachfolgend kurz "Deckungsabweichungen" bezeichnet werden sollen.

Die Parallelverschiebung der Divergenzabschnitte folgt zwar in gleicher Richtung und vorzugsweise in gleichen Schrittlängen, aber in einer individuellen Schrittzahl, die kleiner, höchstens gleich einer vorgegebenen Maximalschrittzahl ist. Diese Maximalschrittzahl wird zweckmäßigerweise aus den beiden miteinander zu vergleichenden Meßprofilen abgeleitet. Dazu geht man von einer Pegeldifferenz an einem definierten Zeitpunkt der beiden Meßprofile aus, der vorzugsweise, gemäß Anspruch 2, der Endzeitpunkt der beiden Meßdauern ist. Letzteres ist deswegen besonders günstig, weil am Ende der Meßdauern die Einflüsse der Einschwingvorgänge mit Sicherheit beseitigt sind und eine Aussage über die bestehenden räumlichen Verhältnissen im Überwachungsraum möglich ist. Diese Pegeldifferenz bestimmt zunächst, in welcher Richtung die Parallelverschiebung erfolgt, ob also das zu verschiebende Meßprofil oberhalb oder unterhalb des anderen als Vergleich dienenden Meßprofils liegt. Die Schrittlängen sind von der Empfindlichkeit des Auswerters bestimmt und in der Regel als feststehender Wert vorgegeben. Daraus ergibt sich dann unter Berücksichtigung der festgestellten Pegeldifferenz die Maximalschrittzahl. Bei manchen Divergenzabschnitten wird beim schrittweisen Verschieben die Pegeldifferenz bereits unterschritten, bevor die Maximalschrittzahl erreicht ist. Diese Abschnitte des Meßprofils werden nicht mehr weiter verschoben. Die übrigen, dann noch als Divergenzabschnitte erscheinenden Teilstücke des Meßprofils werden bis zur vorgegebenen Maximalschrittzahl schrittweise weiter verschoben. Die dann verbleibenden Deckungsabweichungen sind ein eindeutiges Kriterium dafür, daß ein Alarmfall vorliegt.

Die Praxis zeigte, daß solche eklatanten Deckungsabweichungen nur dann anfallen, wenn durch Hinzufügen, Entfernen oder Verschieben eines Objekts sich das Interferenzfeld im Überwachungsraum verändert hat. Dies wird zur Auslösung des Alarmfalls genutzt. Die rechnerische Handhabung dieses Verfahrens läßt sich vorteilhaft durch die in Anspruch 3 angeführte Korrelationsfunktion ermitteln. Zur Auslösung des Alarmfalls wird die dort näher beschriebene Schlußkorrelation benutzt. Statt des dort angeführten Kriteriums der Schlußkorrelation ungleich Null könnte man auch eine Pegeltoleranz vorgeben und überprüfen, in wieweit die Schlußkorrelation die vorgegebene Pegeltoleranz übersteigt. Die Meßgenauigkeit ist umso genauer und präziser, je schneller die miteinander zu vergleichenden Meßprofile aufgenommen werden. Aus diesem Grunde empfiehlt es sich, gemäß Anspruch 4 zu verfahren.

Eine zuverlässige und einfache Betriebsweise ergibt sich, wenn man die Sendeimpulse in Form von Pulspaketen aus einer Schar von Einzelimpulsen gemäß Anspruch 6 aufbaut. In Abhängigkeit von der im Überwachungsraum sich ergebenden Thermik wird dabei die Pausenlänge im Sinne des Anspruches 7 zwischen den Pulspaketen verändert und/oder gemäß Anspruch 8 die Anzahl der Einzelimpulse im Pulspaket korrigiert. Zum einfacheren Vergleich wird man aber gemäß Anspruch 9 die Zeitabstände zwischen den Pulspaketen trotz aller Änderungen möglichst konstant halten.

Es empfiehlt sich als eine erste Alarmbedingung von einer kritischen Pulsbreite bei den miteinander zu vergleichenden Meßprofilen gemäß Anspruch 10 auszugehen, für welche eine Abweichung der Schlußkorrelation vom Toleranzwert festgestellt worden ist. Dadurch lassen sich nämlich Störeinflüsse, die nicht auf einem Alarmgrund beruhen, eliminieren, wie z. B. Umweltgeräusche. Diese einen Alarmfall begründende Bedingung sollte aber dynamisch ausgewertet werden, weshalb es sich dann empfiehlt, gemäß Anspruch 12 zu verfahren. Rechnerisch geht man dabei gemäß Anspruch 13 vor. Auch diese Kriterien für den Alarmfall wird man zweckmäßigerweise der jeweils herrschenden Thermik im Überwachungsraum anpassen und daher sowohl die kritische Pulsbreite nach Anspruch 11 als auch den Referenzwert nach Anspruch 14 verändern.

Die Rechenzeit für die Ermittlung der Meßergebnisse kann gemäß Anspruch 15 zugleich als Maß für die Thermik herangezogen werden. Davon abhängig werden die vorerwähnten diversen Größen beim Meßverfahren selbsttätig im Auswerter verändert. Man spart auf diesem Wege weitere Meßfühler, wie Thermoelemente od. dgl.

Weitere Maßnahmen und Vorteile der Erfindung ergeben sich aus den Zeichnungen und der nachfolgenden Beschreibung. Die Erfindung richtet sich dabei auf alle daraus entnehmbaren neuen Maßnahmen, auch wenn diese nicht ausdrücklich in den Ansprüchen angeführt sein sollten. In den Zeichnungen ist die Erfindung in einem Ausführungsbeispiel dargestellt. Es zeigen:

Fig. 1      schematisch, in Form eines Blockschaltbildes, die Vorrichtung zur Durchführung des erfindungsgemäßen Verfahrens,

Fig. 2      in Draufsicht als Beispiel für den Überwachungsraum ein Kraftfahrzeug mit einer günstigen Anordnung von zwei Sendern und zwei Empfängern, die miteinander abgestimmt arbeiten,

Fig. 3      im Ausbruch ein Teilstück des bei der Erfindung verwendeten elektrischen Ansteuerungssignals für den Ultraschall-Sendeimpuls,

Fig. 4      das sich aus Fig. 3 ergebende Ansteuerungssignal für den gesamten Sendeimpuls in schematischer Darstellung,

Fig. 5 ,      in Abstimmung mit Fig. 4, das am Meßort aus dem Interferenzfeld sich ergebende Empfangssignal in Form der sich daraus ergebenden elektrischen Meßkurve,

Fig. 6      in einer gegenüber Fig. 4 und 5 verkleinerten Darstellung die Aufeinanderfolge von Sendeimpulsen einerseits und zugehörigen Empfangssignalen andererseits,

Fig. 7      die Verfahrensschritte zur Auswertung der erlangten Meßprofile, wenn kein Alarmfall vorliegt und

Fig. 8      in einer zu Fig. 7 entsprechenden Darstellung eine Auswertung, die den Alarmfall kennzeichnet.

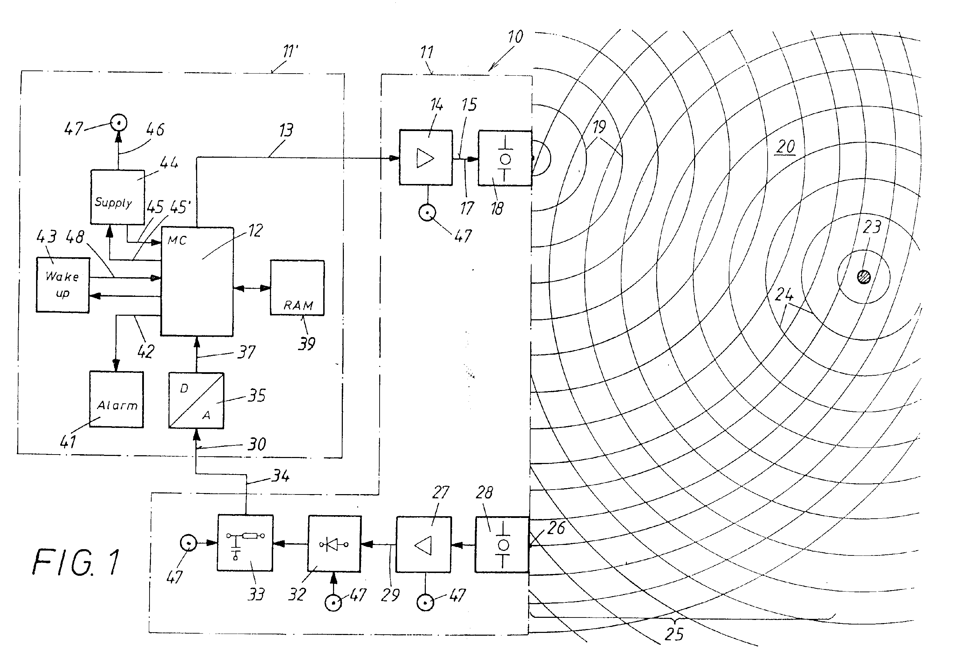

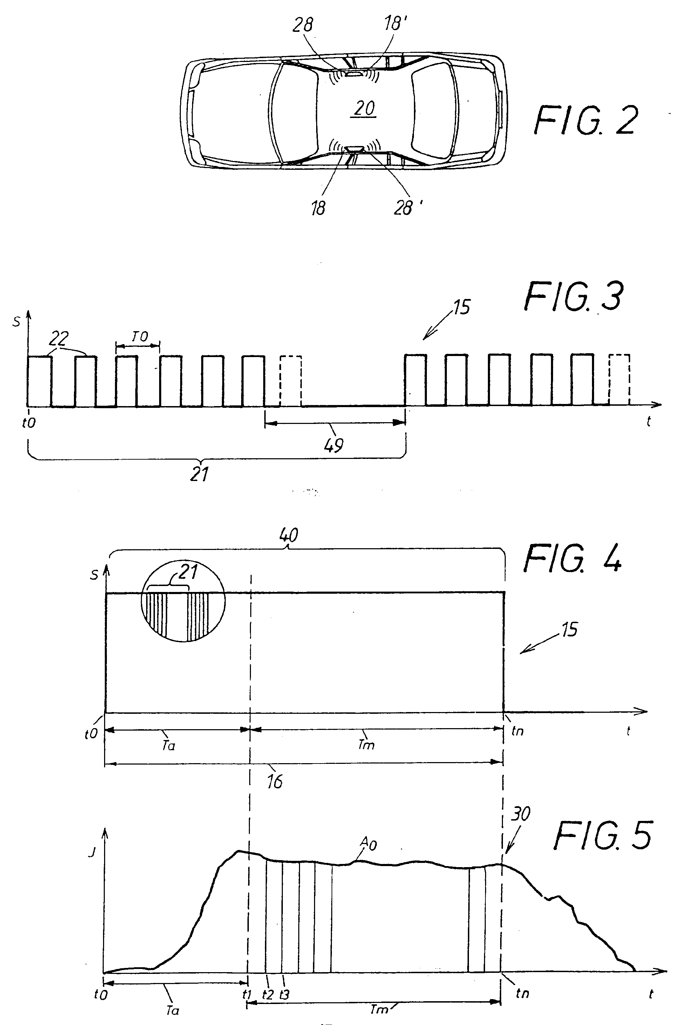

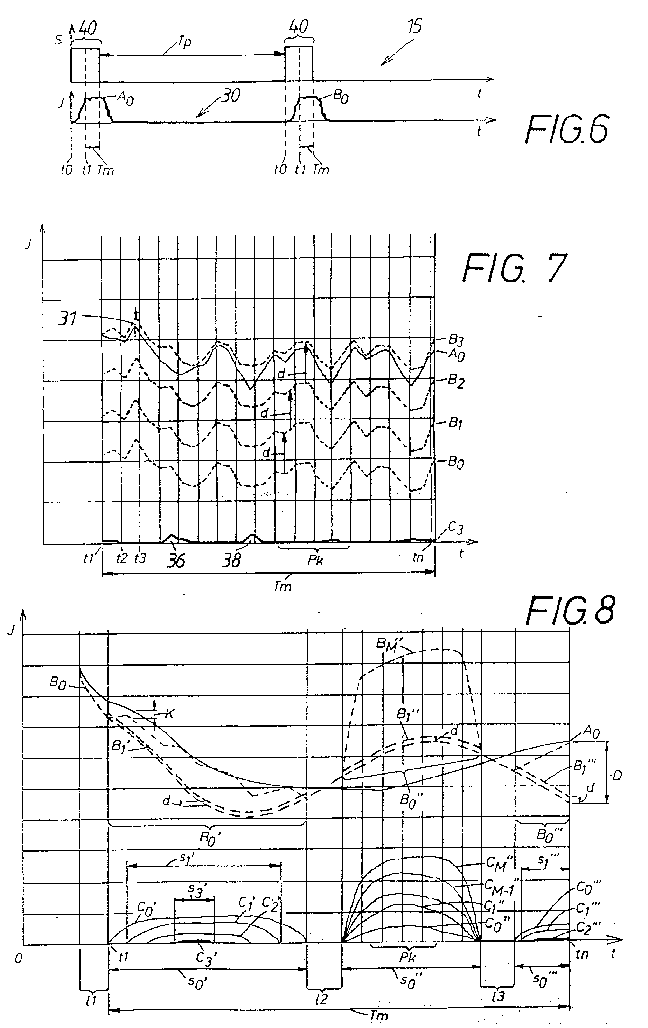

Eine für die Durchführung des erfindungsgemäßen Verfahrens dienende Vorrichtung ist in Fig. 1 gezeigt. Die aus Fig. 1 ersichtlichen Bauteile werden vorteilhaft in zwei Gehäusen 11, 11' zusammengefaßt, die dort durch Strichpunktlinien veranschaulicht sind. Ein Prozessor 12 (Micro-Computer) im Gehäuse 11′ erzeugt über eine elektrische Leitung und einen Verstärker 14 ein elektrisches Ansteuerungssignal 15, das nachfolgend kurz "Sendeimpuls" 15 bezeichnet werden soll. Dieses beaufschlagt einen am Ausgang 17 des Verstärkers 14 angeschlossenen Ultraschall-Sender 18, der einen in Fig. 1 durch Kreise verdeutlichten Ultraschall-Impuls 19 erzeugt. Der zeitliche Verlauf des Sendeimpulses 15 ist in den Fig. 3, 4 und 6 näher erkennbar. Der Sendeimpuls 15 hat einen vom Prozessor 12 bestimmten Beginn to, wie auch das aus Fig. 4 ersichtliche Impulsende tn bei jedem Meßgang genau definiert ist. Ausweislich der Ordinate von Fig. 4 und 6 wird ein konstanter Sendepegel S eingehalten. Damit ist der Sendeimpuls 15 stets reproduzierbar.

In dem aus Fig. 2 ersichtlichen Anwendungsfall sind in zueinander gegensinniger Anordnung zwei solche Ultraschall-Sender 18, 18′ im Überwachungsraum 20 eines Kraftfahrzeugs angeordnet, die zur Ausnutzung der gleichen Elektronik im Gehäuse 11′ abwechselnd wirksam gesetzt werden und jeweils mit einem ihnen zugeordneten Ultraschall-Empfänger 28 bzw. 28′ zusammenwirken. Sie sind an den B-Säulen im Kraftfahrzeug angebracht. Auf der Fahrerseite wird, bei 18, nach vorne gesendet und auf der Beifahrerseite, bei 28, von vorne empfangen. Damit wird der vordere Teil des Fahrzeugs überwacht. In analoger Weise wird bei 18′ und 28′ der hintere Teil des Innenraums überwacht. Die Sendefrequenz beträgt 40 kHz. Die Sender und Empfänger 18, 18′; 28, 28′ arbeiten nach dem Prinzip der Interferenzfeld-Auswertung.

Die erfindungsgemäße Vorrichtung 10 regelt selbsttätig alle Parameter wie Sende-Amplitude, Sendezeit, Empfindlichkeit und dgl. per Software. Eine Justierung ist nicht erforderlich. Die Ansteuerung 15 der Schallsender 18 bzw. 18′ geschieht in Form einer Gruppe 40 von Pulspaketen 21, wobei die Pulspakete 21 aus einer Anzahl von Einzelimpulsen 22 mit Aussetzern 49 bestehen. Die Anzahl der Einzelimpulse kann z. B. zwischen einem und fünfzehn Einzelimpulsen 22 liegen und wird von der Software geregelt. Dadurch wird der Sendepegel optimal eingestellt, was deswegen wichtig ist, weil das Sende- und Empfangsverhalten der als Sender 18 bzw. Empfänger 28 dienenden Ultralschall-Kapseln stark temperaturabhängig ist. Die Dauer eines Einzelimpulses 22, die in Fig. 3 mit To bezeichnet ist, beträgt z. B. 25 µs. Die Dauer 21 eines Pulspakets 21 beträgt z. B. 0,8 ms. Daraus folgt eine Schwebung von ca. 1,3 kHz auf dem Empfangssignal, die aber für die Wirkungsweise dieser Überwachungsvorrichtung unerheblich ist.

Mit dem Ultraschall-Impuls 19 wird, wie Fig. 1 verdeutlicht, der Überwachungsraum 20 und die dort befindlichen Objekte 23 bestrahlt. An den in Fig. 1 nicht näher gezeigten Wänden des Überwachungsraums einerseits und den Objekten 23 andererseits wird nun der Sendeimpuls 19 reflektiert, was in Fig. 1, ausgehend von dem als Punkt angenommenen Objekt 23, ebenfalls durch Kreislinien veranschaulicht ist. Diese reflektierten Signale 24 sollen nachfolgend kurz "Reflexions-Signale" bezeichnet werden. Die Ultraschall-Impulse 19 und Reflexions-Signale 24 erzeugen im Überwachungsraum 20 ein Interferenzfeld 25, was in Fig. 1 durch die Schnittpunkte der Kreise verdeutlicht ist. Das Interferenzfeld 25 wird an einem definierten Ort, der nachfolgend als "Meßort 26" bezeichnet ist, von einem Empfänger 28 überwacht. Der Empfänger 28 gibt das Meßsignal an einen Empfangsverstärker 27, an dessen Ausgang 29 dann ein Wechselspannungssignal anfällt. Die Wechselspannungssignale werden über einen Vollweg-Gleichrichter 32 und einen Tiefpaßfilter 33 integriert und ergeben ein elektrisches Empfangssignal 30, dessen Aussehen in Fig. 5 zu erkennen ist.

Wie aus dem Anstieg des Empfangssignals 30 in Fig. 5 ersichtlich ist, hat sich das Interferenzfeld erst nach einer definierten Einschwingungszeit Ta im Überwachungsraum 20 aufgebaut. Im vorerwähnten Ausführungsbeispiel dauert dies ca. 16 ms, was etwa zwanzig Pulspaketen entspricht. Dann erst, nämlich nach Ablauf dieser Einschwingzeit Ta vom Beginn to des Sendeimpulses 19 an gerechnet, beginnt die eigentliche Meßdauer Tm. Die horizontale Zeitachse t von Fig. 5 ist in Zeitpunkte t1, t2 ... bis tn eingeteilt, die nachfolgend kurz "Meßzeitpunkte" bezeichnet werden sollen und in stets definierter Lage zum Sendeimpuls-Beginn to stehen. Die vertikale Achse von Fig. 5 zeigt die Meßpegel J. Als elektrisches Empfangssignal fällt das dortige Meßprofil $A_0$ an.

Das Empfangssignal 30 gelangt, ausweislich der Fig. 1, über die Leitung 34 zu einem A/D-Wandler 35, wo es an den Meßzeitpunkten t1 bis tn gemäß Fig. 5 quantisiert wird, und erreicht über die Leitung 37 den Prozessor 12. Beim Meßvorgang, also während der Zeit Tm werden etwa dreißig Pulspakete 21 erfaßt, was im vorliegenden Ausführungsbeispiel 24 ms dauert. Während der Meßdauer Tm werden in den Meßzeitpunkten t1 bis tn aus dem anfallenden Meßprofil $A_0$ dreißig Werte abgelesen. Diese Werte werden vom Prozessor 12 in einem Speicher 39 festgehalten und stehen für die nachfolgende Auswertung zur Verfügung. Das Meßprofil $A_0$ ist eine Aussage über die gegebene Beschaffenheit des Überwachungsraums 20 und der dort befindlichen Gegenstände 23.

Ausweislich der Fig. 6 wird nach Ablauf einer bestimmten Pause Tp erneut eine genau gleiche Gruppe 40 von Pulspaketen 21 gesendet und, in exakt zeitlicher Abstimmung damit, wieder ein entsprechendes Empfangssignal 30 aufgenommen, und zwar in Form eines zweiten Meßprofils $B_0$. Die Meßdauer Tm beginnt auch beim Meßprofil $B_0$ in der gleichen zeitlichen Abstimmung mit dem zugehörigen Sendeimpuls-Beginn to wie beim Meßprofil $A_0$. Wenn sich die räumliche Lage der Objekte 23 und die physikalischen Eigenschaften im Überwachungsraum 20 nicht verändert haben, so wird sich das Interferenzfeld 25 gleich ausfallen und daher das Meßprofil $B_0$ dem vorausgehend ausgenommenen Meßprofil $A_0$ gleichen. In der Praxis zeigte es sich aber, daß durch Umwelteinflüsse, z. B. eine durch Sonneneinstrahlung bewirkte Thermik im Überwachungsraum 20, eine Änderung des Meßprofils B eintritt. Dies wirkt sich in einer Veränderung der gemessenen Pegelhöhe J aus. Solange die für die Reflexionsimpulse verantwortlichen Objekte 23 ihre räumliche Lage im Überwachungsraum 20 nicht verändert haben, bleiben, wie die Erfindung erkannt hat, die Meßprofile $A_0$ und $B_0$ im Meßbereich Tm mindestens bereichsweise zueinander ähnlich. Dies wird bei der Auswertung der Meßergebnisse vom Prozessor 12 ausgenutzt, wie anhand der Fig. 7 und 8 näher erläutert wird.

In Fig. 8 sind die Verhältnisse anhand eines komplizierten Alarmfalls verdeutlicht. Das erste Meßprofil $A_0$ ist in Fig. 8 als ausgezogene Linie eingezeichnet. Durch Bewegen eines Objekts 23 im Überwachungsraum 20 ergeben sich dann Veränderungen, die durch eine Thermik im Überwachungsraum 20 weiter verfälscht werden. Beim zweiten Sendeimpuls 15 soll sich in diesem Fall das gestrichelt in Fig. 8 verdeutlichte zweite Meßprofil $B_0$ ergeben. Beide Meßprofile $A_0$, $B_0$ werden vom Prozessor 12 auf übereinstimmende Meßzeitpunkte t1 bis tn bezogen, was in Fig. 8 durch Übereinanderzeichnen der beiden Kurven zum Ausdruck kommt. Man erhält dadurch von den einzelnen Zeitpunkten n abhängige Werte $A_0(n)$ und $B_0(n)$, die nun zeitpunktweise miteinander zu vergleichen sind. Dies erfolgt im Prozessor 12 rechnerisch mit Hilfe einer Korrelation C, die im vorliegenden Fall als quadratische Abweichung nach der Formel ermittelt wird

$$C_0(n) = \frac{\left[A_0(n) - B_0(n)\right]^m}{z} \qquad (1).$$

Dabei bedeutet z einen von den Betriebsbedingungen abhängigen Grundempfindlichkeitsfaktor, der bei dieser Messung einen feststehenden Wert aufweist. Die Korrelation $C_0$ ist ein Maß für die oben erwähnte Deckungsabweichung der beiden Meßprofile $A_0$, $B_0$. Es soll die in Fig. 8 mit K gekennzeichnete tolerierbare Pegeldifferenz vorliegen. Die beiden Meßprofile sollen dann deckungsgleich sein, wenn ihre Meßpegel J diese Pegeltoleranz K unterschreiten. Das gilt zunächst für die Abschnitte $1_1$ bis $1_3$ von Fig. 8, die als die bereits erwähnten "Konvergenzabschnitte" nicht mehr dem weiteren Verfahren zugrunde liegen. Es gibt aber drei Abschnitte $B_0'$, $B_0''$, $B_0'''$, wo schon optisch Abweichungen zwischen den beiden Maßprofilen $A_0$, $B_0$ festzustellen und daher als die oben genannten "Divergenzabschnitte" anzusehen sind. Für diese drei Divergenzbereiche wird die Korrelation $C_0(n)$ errechnet. Man erhält dann in den Abszissenbereichen $s_0'$ bis $s_0'''$ drei Korrelationskurven $C_0'$ bis $C_0'''$, die ungleich Null sind.

Am Ende der Meßdauer Tm, nämlich im Meßzeitpunkt tn, wird nun die Pegeldifferenz D der beiden Meßprofile $A_0$, $B_0$ festgestellt, aus welcher sich sowohl die Richtung als auch die Anzahl der Schritte ergibt, mit welchen die in den Abszissenbereichen $s_0'$ bis $s_0'''$ befindlichen Divergenzabschnitte $B_0'$, $B_0''$ und $B_0'''$ schrittweise um eine vorgegebene Schrittlänge d parallel zu ihrem ursprünglichen Wert verschoben werden müssen. Dies ist in Fig. 8 im Bereich des Divergenzabschnitts $B_0'$ durch die dort eingezeichnete parallelverschobene Kurve $B_1$ veranschaulicht. Das Entsprechende geschieht aber auch mit den beiden anderen Divergenzabschnitten $B_0''$ und $B_0'''$, die in $B_1''$ und $B_1'''$ übergehen. Für diese parallelverschobenen Kurve $B_1'$ bis $B_1'''$ werden nun in Verbindung mit dem Meßprofil $A_0$ die sich dann ergebende Deckungsabweichung $C_1$ ermittelt, und zwar wieder als Korrelation nach der vorstehend angeführten Formel (1), in welcher aber anstelle von $B_0(n)$ der aus der Verschiebung sich ergebende Wert

$$B_1(n) = B_0(n) + d \qquad (2)$$

gesetzt wird. Das positive Vorzeichen bei der Schrittlänge d zeigt, daß die Parallelverschiebung bei diesem Schritt nach oben, im Sinne zunehmender Meßpegel J erfolgt. Die sich daraus ergebenden Werte sind in Fig. 8 als Kurvenabschnitte $C_1'$, $C_1''$ und $C_1'''$ eingezeichnet. Die Deckungsabweichungen $C_1'$ erstrecken sich jetzt über einen kleineren Abszissenbereich $s_1'$, wenn man sie mit den vorausgehenden Deckungsabweichungen $C_0'$ vergleicht, die über den größeren Abszissenbereich $s_0'$ gingen. Das Entsprechende gilt für die Deckungsabweichung $C_1'''$, die gegenüber dem vorausgehenden Fall bei $C_0'''$ sich nur noch über den kleineren Abszissenbereich $s_1'''$ gegenüber $s_0'''$ erstreckt. Die bisher vorliegenden Konvergenzabschnitte $1_1$, $1_2$ und $1_3$ sind somit auf Kosten der neuen Divergenzabschnitte größer geworden. Danach werden in gleicher Richtung schrittweise wiederholt Parallelverschiebungen d der neuen Divergenzabschnitte $B_1'$ bis $B_1'''$ vorgenommen und dann durch entsprechende Anwendung der oben stehenden Gleichungen (1) und (2) die Korrelationen errechnet, die in Fig. 8, z. B. im ersten Abszissenbereich, als Kurve $C_2'$ bis $C_3'$ verdeutlicht sind. Für den Schritt N gelten somit die allgemeinen Formeln:

$$C_N(n) = \frac{\left[ A_0(n) - B_N(n) \right]^m}{z} \quad , \qquad (3)$$

mit

$$B_N(n) = B_{N-1}(n) + d. \quad (4)$$

Ausgehend von der oben erwähnten tolerierbaren Pegeldifferenz K wird festgestellt, ob und nach welcher Parallelverschiebung N die zugehörige Korrelation $C_N(n)$ gleich Null wird. Im angenommenen Ausführungsbeispiel wird im dritten Abszissenabschnitt $s_0'''$ dieser Fall bereits nach der zweiten Parallelverschiebung bei der Korrelation $C_2'''$ erreicht. Die beiden Kurven sind dann bereits miteinander zur Deckung gekommen und unterliegen nicht mehr der weiteren Parallelverschiebung.

Im Gegensatz dazu wird im ersten Abszissenbereich $s_0'$ erst nach der dritten Parallelverschiebung die Korrelation $C_3'$ erreicht. Die letzte Verschiebung wird lediglich im Abszissenbereich $s_3'$ vollzogen, weil die beidseitig davon liegenden benachbarten Bereiche bereits bei den vorausgehenden Verschiebungen die B-Kurve mit dem $A_0$-Meßprofil zur Deckung gebracht wurden. Das weitere Verfahren braucht nur noch beim mittleren Abszissenbereich $s_0''$ von Fig. 8 vollzogen zu werden.

Im Abszissenbereich $s_0''$ besitzt das zweite Meßprofil $B_0''$ kleinere Pegelwerte als das erstere $A_0$, weshalb bei jeder Verschiebung sich die Deckungsabweichungen vergrößern, was man schon beim eingezeichneten Übergang von $C_0''$ auf $C_1''$ erkennt. Diese Abweichungen werden also im Zuge der weiter fortschreitenden schrittweisen Parallelverschiebung dieses Divergenzabschnitts noch erhöht und sind daher besonders deutlich festzustellen. Hier wird die Parallelverschiebung bis zu der oben erwähnten maximalen Schrittzahl M durchgeführt, was in Fig. 8 durch die beiden letzten errechneten Korrelationen $C_{M-1}''$ und $C_M''$ verwirklicht ist. Dann erst ist der Vorgang der Parallelverschiebung abgeschlossen. Bis auf den Abszissenbereich $s_0''$ sind die beiden Meßprofile überall miteinander zur Deckung gekommen. Das Ergebnis $C_M''$ dient nun als Kriterium für den Alarmfall. Zur Alarmauswertung werden zwei Parameter herangezogen. Die Schlußkorrelation $C_M''(n)$ wird auf eine kritische Pulsbreite überprüft und ferner eine dynamische Alarmzählung über mehrere Meßgänge ausgeführt.

Nachdem der Algorithmus der Parallelverschiebung nach Formel (3) und (4) abgeschlossen ist, wird bei der ersten Alarmbedingung überprüft, ob im Meßbereich Tm eine bestimmte Anzahl von benachbarten Meßzeitpunkten tn vorliegt, für welche die Schlußkorrelation $C_M'(n)$ ungleich Null ist.

Diese Anzahl soll als "kritische Pulsbreite" bezeichnet werden, erstreckt sich über die in Fig. 8 mit Pk bezeichnete Strecke und umfaßt im Normalfall drei Meßzeitpunkte tn. Diese Alarmbedingung ist hier im ganzen Abszissenbereich $s_0''$ erfüllt.

Um einen Fehlalarm mit Sicherheit auszuschließen, werden als weitere Alarmbedingung mehrere aufeinanderfolgende Meßgänge beobachtet und gemeinsam ausgewertet; sie werden darauf überprüft, wie oft die ermittelte Schlußkorrelation $C_M''$ die kritische Pulsbreite Pk überschreitet. Die Wahrscheinlichkeit, daß eine stochastische Änderung des Interferenzfeldes durch Thermik mehrfach hintereinander das erste Alarmkriterium Pk erfüllt, ist wesentlich geringer als bei einer Bewegung eines Objekts 23 im Überwachungsraum. Über eine solche dynamische Alarmzählung wird der Alarmgeber vom Prozessor 12 erst dann wirksam gesetzt, wenn die Summe aller bei der Gruppenauswertung erfaßter Meßgänge einen bestimmten Referenzwert übersteigt. Bei jeder Messung, bei welcher die Alarmbedingung Pk vorliegt, wird der Alarmzähler um den Wert 1 erhöht. Wird bei dem darauffolgenden Meßgang diese Alarmbedingung Pk nicht erfüllt, so beginnt die Alarmzählung wieder neu. Man setzt nun einen Referenzwert fest, der im Normalfall beispielsweise bei 2 liegt. Das heißt, Alarm wird nur dann ausgelöst, wenn bei den erfaßten Meßgängen die Anzahl derjenigen, welche die erste Alarmbedingung Pk erfüllen, mindestens den Referenzwert 2 übersteigt. Das hat den Vorteil, daß eine einmalige Abweichung im Meßprofil, z. B. durch Klopfen auf Karosserie und Scheiben oder andere Störungen noch zu keinem Alarm führen. Zwar kann bei starker Thermik auch die erste Alarmbedingung Pk manchmal erfüllt sein, doch tritt das bei mehreren hintereinander erfolgenden Meßgängen nicht mehr ein. Damit wird Fehlalarm zuverlässig verhindert.

Um die durch Thermik auftretenden Störungen des Interferenzfeldes noch besser zu berücksichtigen, kann die Vorrichtung in unterschiedlichen Betriebsarten betrieben werden. Wie bereits erwähnt wurde, entsteht Thermik in dem zu überwachenden Innenraum eines Fahrzeugs durch Sonneneinstrahlung auf die Scheiben und auf die Karosserie. Luftbewegungen im Innenraum können aber auch bei Sturm auftreten und das Interferenzfeld stören. Bei thermischem Gleichgewicht sind die eingelesenen Meßprofile nahezu parallel verschoben, weichen aber bei zunehmender Thermik voneinander ab. Um diesen Einfluß auszuschließen wird vorgeschlagen, die in Fig. 6 erläuterte Pause Tp bei wachsender Thermik zu verkürzen. Dadurch wird bei langen Pausen der Energieverbrauch minimiert. Im vorliegenden Ausführungsbeispiel beträgt die Wiederholzeit zwischen aufeinanderfolgenden Sendeimpulsen 33 ms, ist aber variabel und kann bis zu dem 15-fachen dieses Werts verlängert werden. Bei kleiner Thermik kann man eine lange Pause Tp von z. B. 132 ms verwenden. Weiterhin wird die kritische Pulsbreite Pk bei zunehmender Thermik vergrößert. Schließlich ist es auch möglich, den Referenzwert des Alarmzählers bei zunehmender Thermik zu vergrößern. Im vorliegenden Ausführungsbeispiel wird dieser Referenzwert von dem normalen Wert 2 bei starker Thermik auf den Wert 3 erhöht.

Das Ausmaß der Thermik hängt ab von der im Überwachungsraum herrschenden Temperaturdifferenz. Man kann den Aufwand von Temperaturfühlern vermeiden, wenn man die Anzahl der letzten Meßgänge feststellt, bei denen eine Parallelverschiebung der miteinander zu vergleichenden Meßprofile erfolgte. Über die Software läßt sich ermitteln, wieviel Messungen in der letzten Meßperiode die Routine der vorbeschriebenen Parallelverschiebung d durchlaufen haben. Die Meßperiode finden alle 15 bis 20 Sekunden statt. Dies läßt sich in Prozent erfassen. Der Mittelwert aus den letzten Prozentangaben, der einer Überwachungszeit von ca. einer Minute entspricht, bestimmt, in welche der vorgegebenen Betriebsarten die Auswertung der ermittelten Meßprofile $A_0$, $B_0$ erfolgt.

Die Fig. 7 zeigt in einer mit Fig. 8 vergleichbaren Weise Meßergebnisse, die einen Nicht-Alarmfall kennzeichnen. Auch hier ist das beim ersten Sendeimpuls erlangte Meßprofil $A_0$ in Fig.7 als ausgezogene Linie gezeichnet. Durch Thermik im Überwachungsraum 20 wird bei einem zweiten Meßgang das gestrichelt in Fig. 7 veranschaulichte Meßprofil $B_0$ erlangt. Beide Meßprofile $A_0$, $B_0$ werden vom Prozessor 12 auf die übereinstimmenden Meßzeitpunkte t1 bis tn bezogen, was in Fig. 7 wieder durch Übereinanderzeichnen beider Kurven zum Ausdruck kommt. Bei der nun einsetzenden Auswertung wird eine schrittweise Parallelverschiebung d des zweiten Mepßrofils $B_0$ vorgenommen, wodurch die Kurve nach dem ersten Schritt in ihre aus Fig. 7 ersichtliche Position $B_1$ gelangt. Dadurch sind zwar die miteinander zeitpunktweise zu vergleichenden Pegelhöhen zwischen $B_1$ und $A_0$ einander etwas angeglichen worden, weichen aber für alle Meßzeitpunkte t1 bis tn noch ab. Daher wird in einem weiteren Schritt das Meßprofil $B_1$ im ganzen Meßbereich Tm um die gleiche Schrittlänge und in gleicher Richtung in die aus Fig. 7 ersichtliche Position $B_2$ überführt, was zwar zu einer Verkleinerung der beidseitigen Differenzen zwischen $A_0$ und $B_2$ geführt hat, aber noch nicht ausreicht. Die Richtung der Verschiebung d wird aber als zutreffend erkannt, weil die Abweichungen zwischen $A_0$ und $B_2$ im ganzen Meßbereich Tm kleiner geworden sind. So kommt man schließlich zu einer Endverschiebung d, aus welcher sich die in Fig. 7 ersichtliche Meßprofil-Lage $B_3$ ergibt. Jetzt sind die miteinander zu vergleichenden Meßprofile $A_0$ und $B_3$ für alle Meßzeitpunkte t1 bis tn optimal zur Deckung gekommen. Im Falle von Fig. 7 ist die Kurvenform $B_3$ annähernd der von $A_0$ gleich. Die an den einzelnen Punkten verbleibenden Deckungsabweichungen, in Fig. 7 mit 31 bezeichnet, sind sehr klein und lassen nach der Erfahrung erkennen, daß eine Bewegung der Objekte 23 im Überwachungsraum nicht stattgefunden hat.

Rechnerisch werden diese Meßprofile $A_0$, $B_0$ und ihre gegenseitigen Verschiebungen nach den vorstehenden Formeln (1) bis (4) behandelt und ausgewertet. Die Schlußkorrelation $C_3$ zwischen dem ersten Meßprofil $A_0$ und dem zweiten Meßprofil nach dessen drittem Verschiebungsschritt $B_3$ ist in Fig. 7 eingezeichnet. Wie ersichtlich, ergeben sich nur an einzelnen Stellen 36, 38 zufällige Abweichungen. Diese werden vom Prozessor 12 kleiner als die bereits im Zusammenhang mit Fig. 8 erläuterte kritische Pulsbreite Pk erkannt, weil diese Störungen 36, 38 sich weniger als über drei Meßzeitpunkte tn erstrecken. Damit ist die oben erwähnte erste Alarmbedingung nicht erfüllt. In diesem Fall bleibt der Alarmgeber 41 unwirksam.

Um die Stromaufnahme der Vorrichtung 10 möglichst gering zu halten, wird der Prozessor 12 so häufig wie möglich in einen sogenannten "Sleep-Modus" geschaltet. Dies geschieht vor allem dann, wenn keine nennenswerte Thermik vorliegt. In diesem Fall ist die Pause Tp zwischen zwei aufeinanderfolgenden Messungen besonders groß. Dem Prozessor ist eine Weckschaltung 43 zugeordnet, die über die Leitung 48 den Prozessor 12 veranlaßt festzustellen, ob die vorgegebene Pausenzeit schon erreicht ist oder nicht. Dies geschieht im Ausführungsbeispiel alle 33 ms. Ausgelöst durch die Schaltung 43 stellt der Prozessor fest, ob das Ende der Pausenzeit schon erreicht ist oder nicht und startet dementsprechend entweder einen neuen Meßvorgang oder er schaltet wieder in den Sleep-Modus zurück. Über eine Spannungsversorgungseinheit 44 wird über die Leitung 45 lediglich der Prozessor 12 versorgt und ständig in Betrieb gehalten. Dadurch kann die Stromaufnahme des Gesamtsystems unter 5 mA gehalten werden. Über die Steuerleitung 45′ wird vom Prozessor 12 aus die Einheit 44 dazu veranlaßt, an ihrem Ausgang 46 die Versorgungsleitung 47 abzuschalten. Wie dort weiter ersichtlich, versorgt die Leitung 47 auch noch die Verstärker 14, 27, den Gleichrichter 32 und den Tiefpaßfilter 33.

Bezugszeichenliste:

10                        Vorrichtung

| | |
|---|---|
| 11, 11' | Gehäuse |
| 12 | Prozessor |
| 13 | elektrische Leitung |
| 14 | Sendeverstärker |
| 15 | elektrisches Ansteuerungssignal, Sendeimpuls |
| 16 | Sendedauer von 40 |
| 17 | Verstärkerausgang |
| 18, 18' | Ultraschall-Sender |
| 19 | Ultraschall-Impuls |
| 20 | Überwachungsraum |
| 21 | Pulspaket |
| 22 | Einzelimpuls von 21 |
| 23 | Objekt in 20 |
| 24 | Reflexionssignal von 23 |
| 25 | Interferenzfeld in 20 |
| 26 | Meßort |
| 27 | Empfangsverstärker |
| 28, 28' | Ultraschall-Empfänger |
| 29 | Verstärkerausgang |
| 30 | elektrisches Empfangssignal |
| 31, 31' | Deckungsabweichung von A, B''' |
| 32 | Gleichrichter |
| 33 | Tiefpaßfilter |
| 34 | Leitung |
| 35 | A/D-Wandler |
| 36 | Deckungsabweichung von $C_3$ in Fig. 7 |
| 37 | Leitung |
| 38 | Deckungsabweichung von $C_3$ in Fig. 7 |
| 39 | Speicher |
| 40 | Pulspaket-Gruppe |
| 41 | Alarmgeber |
| 42 | Leitung |
| 43 | Weckschaltung |
| 44 | Spannungs-Versorgungs-Einheit |
| 45 | Leitung |
| 45' | Steuerleitung |
| 46 | Ausgang von 44 |
| 47 | Versorgungsleitung |
| 48 | Leitung |
| 49 | Aussetzer für 22 in 15 |
| d | Schrittlänge und Richtung der Verschiebung |
| $1_1$, $1_2$, $1_3$ | Konvergenzabschnitte von $B_0$ in Fig. 8 |
| $s_0'$, $s_0''$, $s_0'''$ | Abszissenbereich in Fig. 8 (vor Verschiebung) |
| $s_1'$, $s_1'''$ | Abszissenbereich in Fig. 8 (nach erster Verschiebung) |
| $s_3'$ | Abszissenbereich in Fig. 8 (nach dritter Verschiebung) |
| t | Zeitachse |
| t0 | Sendeimpuls-Beginn |
| t1 - tn | Meßzeitpunkte |
| $A_0$ | erstes Meßprofil |
| $B_0$ | zweites Meßprofil (vor Verschiebung) |
| $B_0'$, $B_0''$, $B_0'''$ | Divergenzabschnitte von $B_0$ (vor Verschiebung) |
| $B_1$, $B_2$, $B_3$ | zweites Meßprofil (nach 1., 2. bzw. 3. Verschiebung) |
| $B_1'$, $B_1''$, $B_1'''$ | Divergenzabschnitte von $B_0$ (nach 1. Verschiebung) |
| $B_N$ | zweites Meßprofil (nach N. Verschiebung) |
| $B_M''$ | Divergenzabschnitt des 2. Meßprofils (nach M.Verschiebung) |
| $C_0$ | Deckungsabweichung, Korrelation aus $A_0$, $B_0$ |
| $C_0'$, $C_0''$, $C_0'''$ | Abschnitte von $C_0$ |
| $C_N$ | Deckungsabweichung aus $A_0$ und $B_n$ |

| $C_1'$, $C_1''$, $C_1'''$ | Abschnitte der Deckungsabweichung von $A_0$, $B_1$ |
| $C_2'$, $C_2'''$ | Abschnitte der Deckungsabweichung von $A_0$, $C_2$ |
| $C_3$ | Deckungsabweichung, Korrelation aus $A_0$, $B_3$ |
| $C_3'$, $C_3'''$ | Abschnitte der Deckungsabweichung von $A_0$, $C_3$ |
| $C_{M-1}''$ | Abschnitt der Deckungsabweichung von $A_0$, $C_{M-1}$ |
| $C_M''$ | Abschnitt der Deckungsabweichung von $A_0$, $C_M$ |
| D | Pegeldifferenz zwischen $A_0$, $B_0$ |
| J | Meßpegel |
| Pk | Pulsbreite |
| S | Sendepegel |
| T0 | Einzelimpuls-Dauer (Fig. 3) |
| Ta | Einschwingzeit-Dauer (Fig. 4, 5) |
| Tm | Meßdauer, Meßbereich |

## Patentansprüche

1. Verfahren zur Ultraschall-Überwachung von Räumen (20), insbesondere in Fahrzeugen,

   mit wenigstens einem Ultraschallsender (18, 18'), der den Überwachungs-Raum (20) und die dort befindlichen Objekte wiederholt mit einem reproduzierbaren Ultraschall-Sendeimpuls (15) definierter Sendedauer bestrahlt und Reflexionssignale (24) an den Wänden und Objekten (23) im Überwachungs-Raum (20) erzeugt,

   mit wenigstens einem Ultraschall-Empfänger (28, 28') an einem bestimmten Meßort (26) des Überwachungs-Raums (20) zum Messen eines Empfangssignals (30), das aus einem vom Sendeimpuls (15) und von den Reflexionssignalen (24) im Überwachungs-Raum (20) erzeugten Interferenzfeld (25) entsteht,

   mit einem am Empfänger (28) angeschlossenen Auswerter (12), der stets in definierten Meßzeitpunkten (t1, t2 ...tn) einer mit der Sendedauer (40) abgestimmten Meßdauer (Tm) die Meßpegel des Empfangssignals (30) erfaßt, als zeitabhängiges Meßprofil ($B_0$, $B_1$, ...) abspeichert (39) und mit dem bei einem vorausgehenden Sendeimpuls (15) angefallenen Meßprofil ($A_0$, $A_1$, ...) punkteweise vergleicht,

   und, entsprechend dem Vergleichsergebnis, ein Alarmgeber (41) wirksam gesetzt bzw. unwirksam gelassen wird,

   **dadurch gekennzeichnet**, daß

   die Meßdauern (Tm) für zwei Meßprofile ($A_0$, $B_0$) jeweils erst nach dem Einschwingen (Ta) des Interferenzfeldes (25) beginnen, bei der Auswertung die Meßprofile ($A_0$, $B_0$), bezogen auf die gleichen Meßzeitpunkte (t1 ... tn), zunächst abszissengerecht übereinander gelegt und dann nur jene Abschnitte des einen Meßprofils ($B_0$) gegenüber dem anderen Meßprofil ($A_0$) schrittweise in Ordinatenrichtung parallelverschoben (d) werden,

   in welchen als Diverganz jeweils eine bestimmte Pegeltoleranz (K) übersteigende Deckungsabweichungen ($C_0$, $C_1$,...) zwischen den beiden Meßprofilen ($A_0$; $B_N$) vorliegen,

   alle Divergenzabschnitte zwar in der gleichen Ordinatenrichtung und in vorzugsweise gleichen Schrittlängen (d), aber abschnittweise mit einer individuellen Schrittzahl (N) parallelverschoben werden, mit dem Ziel, dort die Deckungsabweichungen ($C_N$) zu beseitigen,

   die individuelle Schrittzahl (N) stets kleiner/gleich einer vorgegebenen Maximalschrittzahl (M) ist, die sich aus der Pegeldifferenz (D) der beiden Meßprofile ($A_0$, $B_0$) an einem definierten Meßzeitpunkt (tn) der beiden Meßdauern (Tm) ergibt und zugleich die Verschiebungsrichtung der Divergenzabschnitte ($B_N$) bestimmt

   und nach dem Parallelverschieben der Divergenzabschnitte ($P_M$) die verbleibenden Deckungsabweichungen ($C_M$) als Kriterium für den Alarmfall dienen.

2. Verfahren nach Anspruch 1, dadurch gekennzeichnet, daß der definierte Zeitpunkt für die Bestimmung der Maximalschrittzahl (M) sowie der Verschiebungsrichtung jeweils der Endzeitpunkt (tn) der beiden Meßdauern (Tm) ist.

3. Verfahren nach Anspruch 1 oder 2, dadurch gekennzeichnet, daß die Deckungsabweichungen ($C_0$) zwischen den beiden ermittelten Meßprofilen ($A_0$; $B_0$) an den einzelnen Meßzeitpunkten (n) als Korrelation nach der Formel ermittelt werden

$$C_0(n) = \frac{\left[ A_0(n) - B_0(n) \right]^m}{z} \quad ,$$

wo z ein zwar von den Betriebsbedingungen abhängiger, aber konstanter Grundempfindlichkeitsfaktor und die Potenz m mindestens gleich 1 ist,

und nach der Verschiebung der Divergenzabschnitte des zweiten Meßprofils ($B_N(n)$) um N-Schritte mit der Schrittlänge d bis zur Maximalschrittzahl M sich ergebenden Deckungsabweichungen ($C_N(n)$) gegenüber dem ersten Meßprofil ($A_0(n)$) ebenfalls als Korrelation nach der Formel

$$C_N(n) = \frac{\left[ A_0(n) - B_N(n) \right]^m}{z}$$

ermittelt werden, wobei

$$B_N(n) = B_{N-1}(n) + d$$

ist, N zwar von 1 bis maximal M geht, aber abschnittweise bereits dann endet, wenn ($C_N(n)$) in diesem Abschnitt ($C_3'$; $C_2'''$) Null ist,

und daß die nach der Maximalzahl (M) der Verschiebungsschritte in einem Divergenzabschnitt ($B_M'''$) der Meßprofile sich ergebende Schlußkorreltion ($C_M(n)$) ungleich Null als Kriterium für den Alarmfall dient.

4. Verfahren nach einem oder mehreren der Ansprüche 1 bis 3, dadurch gekennzeichnet, daß stets die in unmittelbar aufeinanderfolgenden Meßgängen aufgenommenen Meßprofile ($A_0$, $B_0$) gruppenweise ausgewertet werden.

5. Verfahren nach Anspruch 4, dadurch gekennzeichnet, daß die Potenz m größer/gleich 2 ist.

6. Verfahren nach einem oder mehreren der Ansprüche 1 bis 5, dadurch gekennzeichnet, daß der Sendeimpuls (15, 19) aus einer Gruppe (40) von Pulspaketen (21) bestellt, die aus einer Schar von Einzelimpulsen (22) mit dazwischen liegenden Aussetzern (49) erzeugt sind, und zwischen zwei Pulspaket-Gruppen (40) eine sendefreie Pause Tp liegt.

7. Verfahren nach Anspruch 6, dadurch gekennzeichnet, daß die Pausenlänge (Tp) veränderlich ist, und zwar mit wachsender Thermik im Überwachungs-Raum (20) abnimmt.

8. Verfahren nach einem oder mehreren der Ansprüche 1 bis 7, dadurch gekennzeichnet, daß die Anzahl der Einzelimpulse (22) im Pulspaket (21) veränderlich ist.

9. Verfahren nach einem oder mehreren der Ansprüche 6 bis 8, dadurch gekennzeichnet, daß die Zeitfolge der Pulspakete (21) im Sendeimpuls (15, 19) konstant und unabhängig von der gewählten Anzahl der Einzelimpulse (22) ist.

10. Verfahren nach einem oder mehreren der Ansprüche 3 bis 8, dadurch gekennzeichnet, daß als Kriterium für den Alarmfall jene kritische Pulsbreite (Pk) der zueinander verschobenen Meßprofile ($A_0$; $B_M$) dient, die für eine bestimmte Anzahl von benachbarten Meßzeitpunkten (tn) die Schlußkorrelation ($C_M$) ungleich Null ist.

11. Verfahren nach Anspruch 10, dadurch gekennzeichnet, daß die kritische Pulsbreite (Pk) in Abhängigkeit von den Betriebsbedingungen gewählt wird, und zwar mit wachsender Thermik im Überwachungs-Raum (20) vergrößert wird.

12. Verfahren nach einem oder mehreren der Ansprüche 3 bis 11, dadurch gekennzeichnet, daß die Anzahl der in aufeinanderfolgenden Meßgängen sich ergebenden Schlußkorrelationen ($C_M$) ungleich Null als ein Kriterium für den Alarmfall dient.

13. Verfahren nach Anspruch 12, dadurch gekennzeichnet, daß beim Auswerten die Anzahl der in aufeinanderfolgenden Meßgängen anfallenden Schlußkorrelation ($C_M$), die das Kriterium des Alarmfalls erfüllen, additiv gruppenweise erfaßt werden und nur dann Alarm ausgelöst wird, wenn die sich ergebende Summe einen bestimmten Referenzwert erreicht, wobei nach einem Meßgang, bei dem die Schlußkorrelation ($C_M$) das Kriterium des Alarmfalls nicht erfüllt, die Addition neu beginnt.

14. Verfahren nach Anspruch 13, dadurch gekennzeichnet, daß der Referenzwert in Abhängigkeit von den Betriebsbedingungen gewählt wird, und zwar mit wachsender Thermik im Überwachungs-Raum (20) zunimmt.

15. Verfahren nach einem oder mehreren der Ansprüche 1 bis 14, dadurch gekennzeichnet, daß als Maß für die Thermik im Überwachungs-Raum die Anzahl der letzten Meßgänge dient, bei denen eine Parallelverschiebung der miteinander zu vergleichenden Meßprofile ($A_0$; $B_0$) erfolgt.

**Claims**

1. Process for the ultrasound monitoring of spaces (20), in particular in vehicles,
having at least one ultrasound transmitter (18, 18′) which repeatedly irradiates the monitoring space (20) and the objects therein with a reproducible ultrasound transmitting pulse (15) of defined transmitting duration and generates reflection signals (24) at the walls and objects (23) in the monitoring space (20), having at least one ultrasound receiver (28, 28′) at a particular measurement location (26) of the monitoring space (20) for measuring a receiving signal (30) which arises from an interference field (25) produced by the transmitting pulse (15) and the reflection signals (24) in the monitoring space (20),
having an evaluator (12) which is connected to the receiver (28) and which always detects at defined measurement instants (t1, t2 ... tn) of a measurement duration (Tm) matched to the transmission duration (40) the measurement levels of the receiving signal (30), stores them (39) as a time-dependent measurement profile ($B_0$, $B_1$, ...) and compares them point by point with the measurement profile ($A_0$, $A_1$, ...) produced with a preceding transmitting pulse (15),
and in accordance with the comparison result an alarm transmitter (41) is activated or left inactive, characterized in that
the measurement durations (Tm) for two measurement profiles ($A_0$, $B_0$) each start only after the transient effects (Ta) of the interference field (25) have died away,
during the evaluation, the measurement profiles ($A_0$, $B_0$) are first placed one above the other with the X axes matching, in relation to the same measurement instants (t1 ... tn), and then only those portions of the one measurement profile ($B_0$) are offset parallel (d) stepwise in the direction of the Y axis with respect to the other measurement profile ($A_0$)
in which there are as a divergence in each case deviations from coincidence ($C_0$, $C_1$, ...) between the two measurement profiles ($A_0$; $B_N$) which exceed a particular level tolerance (K),
all the divergence portions are offset parallel in the same direction of the Y axis and preferably with the same step sizes (d), but in portions with an individual number of steps (N), with the aim of there eliminating the deviations from coincidence ($C_N$),
the individual number of steps (N) is always less than or equal to a predetermined maximum number of steps (M) which results from the level difference (D) of the two measurement profiles ($A_0$, $B_0$) at a defined measurement instant (tn) of the two measurement durations (Tm) and at the same time determines the direction of offset of the divergence portions ($B_N$),
and after the parallel offset of the divergence portions ($P_H$) the remaining deviations from coincidence ($C_M$) serve as a criterion for the event of an alarm.

2. Process according to Claim 1, characterized in that the defined instant for determining the maximum number of steps (M) and the direction of offset is in each case the final instant (tn) of the two measurement durations (Tm).

3. Process according to Claim 1 or 2, characterized in that the deviations from coincidence ($C_0$) between the two determined measurement profiles ($A_0$; $B_0$) at the individual measurement instants (n) are determined as a correlation in accordance with the formula

11

$$C_0(n) = \frac{\left[ A_0(n) - B_0(n) \right]^m}{z} \quad,$$

where z is a basic sensitivity factor which, although it is dependent on the operating conditions, is constant, and the exponent m is at least equal to 1,

and deviations from coincidence ($C_N(n)$) with reference to the first measurement profile ($A_0(n)$) resulting after the offset of the divergence portions of the second measurement profile ($B_N(n)$) by N steps of step size d until the maximum number of steps M is reached are determined also as a correlation in accordance with the formula

$$C_N(n) = \frac{\left[ A_0(n) - B_N(n) \right]^m}{z}$$

where

$$B_N(n) = B_{N-1}(n)^+ d$$

N, although it is from 1 to a maximum of M, in portions already ends when ($C_N(n)$) is zero in this portion ($C_3'$; $C_2'''$),

and in that the final correlation ($C_M(n)$) not equal to zero resulting after the maximum number (M) of offset steps in a divergence portion ($B_M'''$) of the measurement profiles serves as a criterion for the event of an alarm.

**4.** Process according to one or more of Claims 1 to 3, characterized in that measurement profiles ($A_0$, $B_0$) recorded in directly successive measurement procedures are always evaluated in groups.

**5.** Process according to Claim 4, characterized in that the exponent m is greater than or equal to 2.

**6.** Process according to one or more of Claims 1 to 5, characterized in that the transmitting pulse (15, 19) comprises a group (40) of pulse packets (21) which are produced from a set of individual pulses (22) with interruptions (49) in between, and a transmission-free break Tp lies between two pulse packet groups (40).

**7.** Process according to Claim 6, characterized in that the length of the break (Tp) is variable, being reduced as the thermal currents in the monitoring space (20) increase.

**8.** Process according to one or more of Claims 1 to 7, characterized in that the number of individual pulses (22) in the pulse packet (21) is variable.

**9.** Process according to one or more of Claims 6 to 8, characterized in that the time sequence of pulse packets (21) in the transmitting pulse (15, 19) is constant and independent of the selected number of individual pulses (22).

**10.** Process according to one or more of Claims 3 to 8, characterized in that as the criterion for the event of an alarm there serves the critical pulse width (Pk) of the relatively offset measurement profiles ($A_0$; $B_M$) which for a particular number of adjacent measurement instants (tn) the final correlation ($C_M$) is not equal to zero[1].

**11.** Process according to Claim 10, characterized in that the critical pulse width (Pk) is selected in dependence on the operating conditions, and is increased as the thermal currents in the monitoring space (20) increase.

[1]Translator's Note: This relative clause is grammatically incomplete in the German language original.

**12.** Process according to one or more of Claims 3 to 11, characterized in that the number of final correlations ($C_M$) not equal to zero produced in successive measurement procedures serves as a criterion for the event of an alarm.

**13.** Process according to Claim 12, characterized in that during evaluation the number of final correlations ($C_M$) which occur in successive measurement procedures and fulfil the criterion of the event of an alarm are detected additively in groups and the alarm is only triggered if the resulting total reaches a particular reference value, with the addition beginning again after a measurement procedure in which the final correlation ($C_M$) does not fulfil the criterion of the event of an alarm.

**14.** Process according to Claim 13, characterized in that the reference value is selected in dependence on the operating conditions, and increases as the thermal currents in the monitoring space (20) increase.

**15.** Process according to one or more of Claims 1 to 14, characterized in that there serves as the measure of the thermal currents in the monitoring space the number of the most recent measurement procedures in which a parallel offset of the measurement profiles ($A_0$; $B_0$) to be compared with one another takes place.


**Revendications**

**1.** Procédé de surveillance par ultrasons de volumes (20), en particulier dans des véhicules à moteur,
comprenant au moins un émetteur d'ultrasons (18, 18′), qui balaye de façon répétée le volume (20) à surveiller et les objets qui s'y trouvent au moyen d'une impulsion émettrice ultrasonore reproductible (15) de durée d'émission définie et qui produit des signaux de réflexion (24) sur les parois et les objets (23) dans le volume à surveiller (20),
comprenant au moins un récepteur d'ultrasons (28, 28′) en un emplacement de mesure déterminé (26) du volume à surveiller (20) pour mesurer un signal de réception (30) qui est déterminé par un champ d'interférence (25) produit par l'impulsion émettrice (15) et par les signaux de réflexion (24) dans le volume à surveiller (20),
un dispositif d'évaluation (12) raccordé au récepteur (28), qui détecte continuellement, en des points de mesure définis dans le temps (t1, t2 ...,tn) d'une durée de mesure (Tm) adaptée à la durée d'émission (40), le niveau de mesure du signal reçu (30), le met en mémoire (39) sous forme d'une courbe de mesure fonction du temps ($B_0$, $B_1$,...) et compare point par point la courbe de mesure ($A_0$, $A_1$, ...) obtenue d'une impulsion d'émission (15) précédente,
et en fonction de la comparaison met en fonctionnement un générateur d'alarme (41) ou le maintient inactif,
caractérisé en ce que
les durées de mesure (Tm) de deux courbes de mesure ($A_0$, $B_0$) commencent respectivement seulement après la mise en oscillations (Ta) du champ d'interférence (25),
lors de l'évaluation, les courbes de mesure ($A_0$, $B_0$) rapportées aux mêmes points de mesure dans le temps (t1,...,tn) sont d'abord correctement disposées l'une au-dessus de l'autre sur l'abscisse et seules les sections de l'une des courbes de mesure ($B_0$) sont ensuite déplacées (d) en direction de l'ordonnée en parallèle et pas à pas par rapport à l'autre courbe de mesure ($A_0$),
dans lesquelles des déviations de recouvrement ($C_0$, $C_1$, ...) formant la divergence et qui dépassent une tolérance de niveau déterminé (K) sont présentes entre les deux courbes de mesure ($A_0$, $B_N$),
toutes les sections de divergence étant décalées en parallèle il est vrai dans la même direction de l'ordonnée et de préférence selon des mêmes longueurs de pas (d), mais par sections avec un nombre de pas individuel (N), dans le but d'éliminer des divergences de recouvrement ($C_N$),
le nombre de pas individuel (N) étant toujours plus petit ou égal à un nombre de pas maximal prédéterminé (M), qui est obtenu à partir de la différence de niveau (D) des deux courbes de mesure ($A_0$, $B_0$) en un point de mesure dans le temps défini (tn) des deux durées de mesure (Tm) et qui détermine simultanément la direction du déplacement des sections de divergence ($B_N$),
et après décalage en parallèle des sections de divergence ($P_M$), les déviations en recouvrement restantes ($C_M$) servent de critère pour le cas d'alarme.

**2.** Procédé selon la revendication 1, caractérisé en ce que le point dans le temps défini pour la détermination du nombre de pas maximal (M) ainsi que pour la direction du décalage est chaque fois le point d'extrémité dans le temps (tn) des deux durées de mesure (Tm).

3. Procédé selon la revendication 1 ou 2, caractérisé en ce que les déviations en recouvrement ($C_0$) entre les deux courbes de mesure déterminées ($A_0$; $B_0$) sont déterminées aux points de mesure dans le temps individuels (n) en tant que corrélation selon la formule

$$C_0(n) = \frac{[A_0(n) - B_0(n)]^m}{z}$$

où z est un facteur de sensibilité de base qui dépend il est vrai des conditions de fonctionnement mais qui est constant, et la puissance m est au moins égale à 1,

et les déviations de recouvrement ($C_N(n)$) par rapport à la première courbe de mesure($A_0(n)$) sont déterminées après décalage des sections de divergence de la seconde courbe de mesure($B_N(n)$) sur N pas avec la longueur de pas d jusqu'au nombre de pas maximal M, également en tant que corrélation selon la formule

$$C_N(n) = \frac{[A_0(n) - B_N(n)]^m}{z}$$

où

$$B_N(n) = B_{N-1}(n) {}^+ d$$

N étant compris il est vrai entre 1 et au maximum M mais se terminant déjà par sections quand ($C_N(n)$) est nul dans cette section ($C_3'$; $C_2'''$),

et en ce que la corrélation finale ($C_N(n)$) qui est obtenue après le nombre maximum N des pas de décalage dans une section de divergence ($B_M'''$) des courbes de mesure qui n'est pas nulle sert de critère pour le cas d'alarme.

4. Procédé selon l'une ou plusieurs des revendications 1 à 3, caractérisé en ce que les courbes de mesure ($A_0$, $B_0$) continuellement détectées au cours des opérations de mesure se suivant immédiatement les unes les autres sont évaluées par groupes.

5. Procédé selon la revendication 4, caractérisé en ce que la puissance m est supérieure ou égale à 2.

6. Procédé selon l'une ou plusieurs des revendications 1 à 5, caractérisé en ce que l'impulsion d'émission (15, 19) est formée par un groupe (40) de paquets d'impulsions (21) qui sont produits à partir d'un ensemble d'impulsions individuelles (22) avec des intervalles de suspension (49) entre eux, et une pause sans émission $T_p$ est située entre deux groupes de paquets d'impulsions (40).

7. Procédé selon la revendication 6, caractérisé en ce que la longueur de pause (Tp) peut être modifiée et diminue en fait quand la chaleur augmente dans le volume à surveiller (20).

8. Procédé selon l'une ou plusieurs des revendications 1 ) 7, caractérisé en ce que le nombre des impulsions individuelles (22) du paquet d'impulsions (21) est modifiable.

9. Procédé selon l'une ou plusieurs des revendications 6 à 8, caractérisé en ce que la succession dans le temps des paquets (21) de l'impulsion émettrice (19) est constante et indépendante du nombre choisi pour les impulsions individuelles (22).

10. Procédé selon l'une ou plusieurs des revendications 3 à 8, caractérisé en ce que chaque largeur d'impulsion critique (Pk) des courbes de mesure ($A_0$; $B_M$) décalées l'une par rapport à l'autre sert de critère pour le cas d'alarme, largeur qui n'est pas nulle pour un nombre déterminé de points de mesure dans le temps (tn) voisins de la corrélation finale ($C_M$).

11. Procédé selon la revendication 10, caractérisé en ce que la largeur d'impulsion critique (Pk) est choisie en fonction des conditions de fonctionnement, et augmente en fait quand augmente la chaleur dans le volume à surveiller (20).

12. Procédé selon l'une ou plusieurs des revendications 3 à 11, caractérisé en ce que le nombre des corrélations finales ($C_M$) qui ne sont pas nulles et qui sont obtenues par les opérations de mesure successives sert de critère pour le cas d'alarme.

13. Procédé selon la revendication 12, caractérisé en ce que lors de l'évaluation, le nombre des corrélations finales ($C_M$) provenant des opérations de mesure successives qui satisfont le critère du cas d'alarme sont détectées par groupes et par addition, et l'alarme n'est déclenchée que,lorsque la somme obtenue atteint une valeur de référence déterminée, l'addition recommençant après une opération de mesure dans laquelle la corrélation finale ($C_M$) ne satisfait pas le critère du cas d'alarme.

14. Procédé selon la revendication 13, caractérisé en ce que la valeur de référence est choisie en fonction des conditions du fonctionnement et en fait lorsque la chaleur augmente dans le volume à surveiller (20).

15. Procédé selon l'une ou plusieurs des revendications 1 à 14, caractérisé en ce qu'on utilise en tant que mesure de la chaleur dans le volume à surveiller le nombre des dernières opérations de mesure pendant lesquelles a lieu un décalage en parallèle des courbes de mesure ($A_0$; $B_0$) qui doivent être comparées l'une avec l'autre.

FIG. 1

EP 0 482 401 B1

*FIG. 2*

*FIG. 3*

*FIG. 4*

*FIG. 5*

17

FIG.6

FIG. 7

FIG.8